# EUROPÄISCHE PATENTANMELDUNG

(11) **EP 1 120 584 A1**
(43) Veröffentlichungstag der Anmeldung: **01.08.2001**
(21) Anmeldenummer: 01101320.8
(22) Anmeldetag: 20.01.2001
(51) Int. Cl.: F16H 7/18, F16H 7/20, F01L 1/02

(54) **Umlenk- oder Spannrolle für den Riementrieb einer Brennkraftmaschine**

(30) Priorität: 26.01.2000 DE 10003208
(71) Anmelder: Dr.Ing. h.c.F. Porsche Aktiengesellschaft, 70435 Stuttgart (DE)
(72) Erfinder: Schneider, Klaus, 75233 Tiefenbronn (DE); Koch, Asmus, 57627 Hachenburg (DE)

(57) **Zusammenfassung**

Die Erfindung geht aus von einer Umlenk- oder Spannrolle (26, 28, 30) für den Riementrieb einer Brennkraftmaschine mit einer Durchgangsöffnung, durch die ein Befestigungselement (40), insbesondere eine Befestigungsschraube hindurchgeführt ist. Es wird vorgeschlagen, daß auf den durch die Durchgangsöffnung hindurchgeführten Teil des Befestigungselementes (40) ein elastischer Haltering (50) aufgesetzt ist, der ein Herausfallen des Befestigungselementes (40) verhindert.

Damit wird auf einfache Art und Weise eine Vormontage der Umlenk- oder Spannrolle erreicht.

## Beschreibung

Die Erfindung geht aus von einer Umlenk- oder Spannrolle gemäß den Merkmalen des Oberbegriffs des Anspruchs 1.

Es ist bekannt, die Verbraucher eines Kraftfahrzeuges, wie z.B. Lichtmaschine, Klimakompressor, Wasserpumpe etc. über einen Riementrieb durch die Rotation der Kurbelwelle anzutreiben. Da diese Verbraucher platzsparend zueinander angeordnet sind, wird der Riemen über entsprechende Rollen umgelenkt. Darüber hinaus ist es bekannt, die Spannung des Riemens mit Hilfe von Spannrollen einzustellen. Die Umlenk- oder Spannrollen werden über entsprechende Befestigungsschrauben am Motorblock oder an dafür vorgesehene Zwischenkonsolen verschraubt. Diese Schraubverbindungen bestehen aus mehreren Einzelteilen, wie z.B. Schraube, Unterlegscheibe u.a., die vor der Montage der Umlenk- oder Spannrolle zusammengesetzt werden müssen.

Aufgabe der Erfindung ist es, eine einfache und praktikable Lösung zu entwickeln, bei der die o.g. Einzelteile der Umlenk- oder Spannrolle bereits auf der Umlenk- oder Spannrollle vormontiert sind.

Die Aufgabe wird erfindungsgemäß durch die im kennzeichnenden Teil des Anspruchs 1 angegebenen Merkmale gelöst.

Dadurch, daß bereits vor der Montage der Umlenk- oder Spannrolle am Motorblock der Brennkraftmaschine das Befestigungselement mittels eines elastischen Halteringes gesichert ist, braucht der Monteur bzw. die automatisierte Montageeinheit beim Zusammenbau des Riementriebes lediglich die vormontierte Baueinheit nehmen und sie ohne jede weitere Handhabe am Motorblock befestigen. Damit läßt sich die Montagezeit verkürzen, ohne das höhere Fertigungskosten für die Umlenk- bzw. Spannrolle entstehen. Durch die vormontierte Baueinheit wird gleichzeitig eine automatische Montage der Umlenk- bzw. Spannrolle mit einem Roboter ermöglicht.

In den Unteransprüchen sind weitere vorteilhafte Ausgestaltungen und Verbesserungen der erfindungsgemäßen Umlenk- oder Spannrolle enthalten.

Dadurch, daß der elastische Haltering in einer Aufnahmenut eines Distanzbolzens integriert ist, braucht er nach der Montage der Umlenk- bzw. Spannrolle nicht entfernt werden. Damit ist sichergestellt, daß bei der Montage die Schraubverbindung am Motorblock richtig justiert ist und das vorgesehene Anzugsmoment eingehalten wird.

In vorteilhafter Weise wird für das Befestigungselement eine Befestigungsschraube eingesetzt, bei der sich der elastische Haltering am Gewinde der Befestigungsschraube abstützen kann. Die Verwendung einer Schraube mit Ansatzspitze bietet den Vorteil, daß eine schiefe Einbauposition und damit eine Beschädigung des Gewindes vermieden wird.

Ein Ausführungsbeispiel der Erfindung ist in der Zeichnung dargestellt und wird nachfolgend näher erläutert.

Es zeigen:

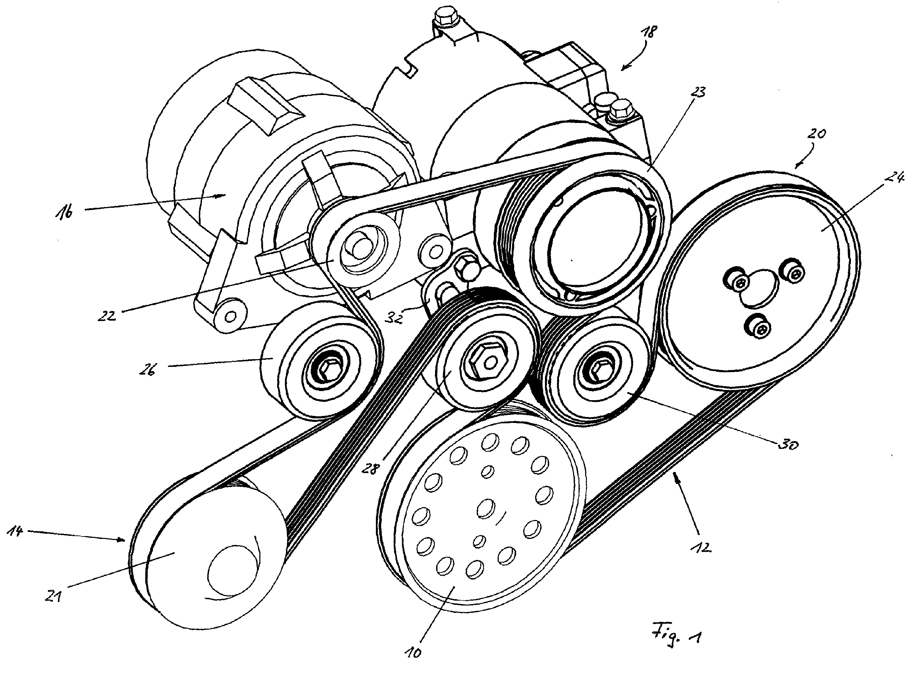

- Fig. 1: eine Gesamtanordnung eines Riementriebes,
- Fig. 2: einen Schnitt durch eine Umlenkrolle,
- Fig. 3: eine Draufsicht auf die Umlenkrolle und
- Fig. 4: eine Explosionsdarstellung der Bauteile der Umlenkrolle.

Die auf einer nicht dargestellten Kurbelwelle befestigte Riemenscheibe 10 treibt über einen Keilriemen 12 eine Wasserpumpe 14, eine Lichtmaschine 16, einen Klimakompressor 18 und eine Servopumpe 20 über entsprechend an diesen Bauteilen vorgesehene Riemenscheiben 21, 22, 23, 24 an. Damit der Keilriemen 12 zur Kraftübertragung auf einem Großteil der Umfangsflächen der Riemenscheiben 10, 21, 22, 23, 24 anliegt, sind drei Umlenkrollen 26, 28 und 30 vorgesehen, wobei die Umlenkrolle 28 an einem nicht näher dargestellten Federarm 32 befestigt ist und damit gleichzeitig die entsprechende Spannung des Keilriemens 12 erzeugt.

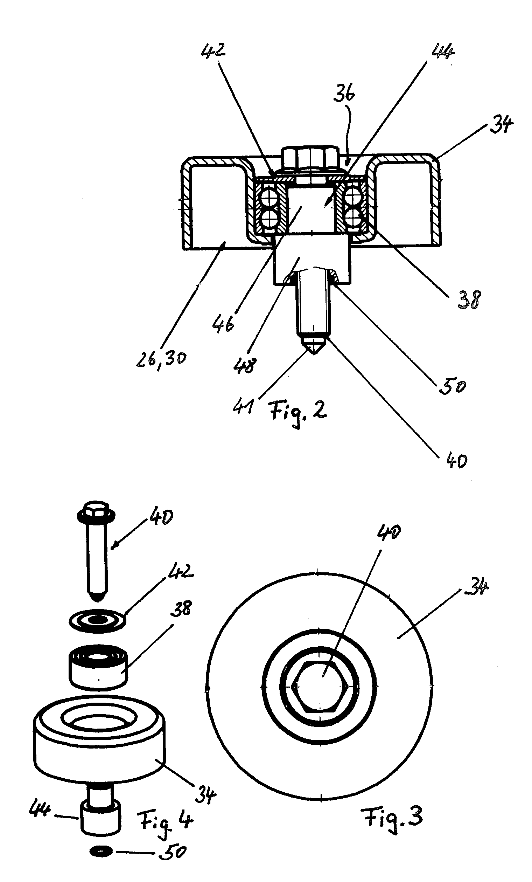

Wie in den Figuren 2 bis 4 näher dargestellt, bestehen die Umlenkrollen 26, 30 aus einem zylinderförmigen Gehäuseteil 34, mit einer zentrisch angeordneten topfförmigen Aufnahme 36, in der ein Kugellager 38 Aufnahme findet. Zur Befestigung der Umlenkrollen 26, 30 ist eine Sechskantschraube 40 vorgesehen, die mit einer Abdeckscheibe 42 versehen, durch die Öffnung des Kugellagers 38 und durch eine Öffnung in der topfförmigen Aufnahme 36 hindurchgeführt ist. Die Schraube 40 weist auf ihrer Gewindeseite eine Ansatzspitze 41 auf, die eine gerade Einbauposition gewährleistet. Von der Gewindeseite der Sechskantschraube 40 her ist ein Distanzbolzen 44 aufgesteckt. Der Distanzbolzen 44 weist zwei mit unterschiedlichen Radien versehene Abschnitte 46 und 48 auf, wobei der mit einem kleineren Radius versehene Abschnitt 46 in die Öffnung des Kugellagers 38 eingesteckt ist. Auf der Stirnseite des Abschnitts 48 des Distanzbolzens 44 ist eine Aufnahmenut für einen 0-Ring 50 vorgesehen. Der 0-Ring 50 stützt sich am Gewinde der Sechskantschraube 40 ab, so daß ein Herausfallen der vormontierten Einheit aus Sechskantschraube 40, Abdeckscheibe 42 und Distanzbolzen 44 verhindert wird. Dadurch, daß der 0-Ring 50 in der Aufnahmenut des Distanzbolzens 44 integriert ist, können die Umlenkrollen 26, 30 mit Hilfe der vormontierten Befestigungsschraube 40 am Motorblock verschraubt werden, ohne das der 0-Ring 50 eingeklemmt und damit das vorgewählte Anzugsmoment für die Sechskantschraube 40 verfälscht.

Das mittels des 0-Rings 50 realisierte Befestigungsprinzip für eine Baugruppen- Montage ist nicht auf die Anwendung für eine Umlenk- oder Spannrolle eines Riementriebes einer Brennkraftmaschine eingeschränkt, sondern überall dort anwendbar, wo eine entsprechende Vormontage der Befestigungsmittel sinnvoll bzw. zeitsparend eingesetzt werden kann.

## Patentansprüche

1. Umlenk- oder Spannrolle für den Riementrieb einer Brennkraftmaschine mit einer Durchgangsöffnung, durch die ein Befestigungselement, insbesondere eine Befestigungsschraube hindurchgeführt ist, dadurch gekennzeichnet, daß auf den durch die Durchgangsöffnung hindurchgeführten Teil des Befestigungselementes (40) ein elastischer Haltering (50) aufgesetzt ist, der ein Herausfallen des Befestigungselementes (40) verhindert.

2. Umlenk- oder Spannrolle nach Anspruch 1, dadurch gekennzeichnet, daß in einer topfförmigen Aufnahme der Umlenk- oder Spannrolle (26, 30) ein Rollenlager (38) angeordnet ist, in dessen Öffnung ein Abschnitt (46) eines Distanzbolzens (44) Aufnahme findet.

3. Umlenk- oder Spannrolle nach Anspruch 1 oder 2, dadurch gekennzeichnet, daß an einem Abschnitt (48) des Distanzbolzens (44) in der Aufnahmeöffnung für das Befestigungselement (40) eine Aufnahmenut für den elastischen Haltering (50) vorgesehen ist.

4. Umlenk- oder Spannrolle nach einem der vorhergehenden Ansprüche, dadurch gekennzeichnet, daß das Befestigungselement als Befestigungsschraube (40) ausgebildet ist, wobei sich der elastische Haltering (50) am Gewinde der Befestigungsschraube (40) abstützt.
